# EUROPEAN PATENT APPLICATION

(11) **EP 2 395 454 A2**
(43) Date of publication of application: **14.12.2011**
(21) Application number: 11169502.9
(22) Date of filing: 10.06.2011
(51) Int. Cl.: G06K 9/22, G06K 9/00

(54) **Image generation system, shape recognition method, and information storage medium**

(30) Priority: 11.06.2010 JP 2010134219
(71) Applicant: NAMCO BANDAI Games Inc., Shinagawa-ku Tokyo 140-8590 (JP)
(72) Inventor: Sakakibara, Tadashi, Shinagawa-ku, Tokyo 140-8590 (JP)
(74) Representative: Emerson, Peter James

(57) **Abstract**

An image generation system includes a moving path data acquisition section that acquires moving path data about a shape input indicator, a moving path data storage section that stores the moving path data acquired by the moving path data acquisition section, and a shape recognition section that performs a shape recognition process on an input shape that has been input using the shape input indicator based on the moving path data. The shape recognition section performs the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

## Description

### BACKGROUND

The present invention relates to an image generation system, a shape recognition method, an information storage medium, and the like.

A game device that allows the player to perform a game operation using a game controller provided with a motion sensor instead of a game controller provided with an operation button and a direction key, has been popular. A game device having such an operation interface allows the player (operator) to perform an intuitive operation input, and can simplify the game operation, for example. JP-A-2008-136695 discloses a game device that enables such an intuitive interface, for example. JP-A-2002-259046 discloses technology that photographs and recognizes a motion that draws a character or a symbol in the air with a finger or gesture using a video camera.

However, it is very difficult to accurately recognize a character drawn in the air since a complex character recognition process is required.

The character recognition rate may be improved by limiting the character drawing range, for example.

However, since this method requires the player to draw a character within the limited range, convenience to the user is impaired.

### SUMMARY

According to one aspect of the invention, there is provided an image generation system comprising:
a moving path data acquisition section that acquires moving path data about a shape input indicator;
a moving path data storage section that stores the moving path data acquired by the moving path data acquisition section; and
a shape recognition section that performs a shape recognition process on an input shape that has been input using the shape input indicator based on the moving path data,
the shape recognition section performing the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

According to another aspect of the invention, there is provided a shape recognition method that recognizes an input shape that has been input using a shape input indicator, the shape recognition method comprising:
acquiring moving path data about a shape input indicator;
storing the acquired moving path data in a moving path data storage section;
performing a shape recognition process on an input shape that has been input using the shape input indicator based on the moving path data; and
performing the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

According to another aspect of the invention, there is provided a computer-readable information storage medium storing a program that causes a computer to execute the above shape recognition method.

### BRIEF DESCRIPTION OF THE DRAWINGS

FIG. 1 shows a configuration example of an image generation system according to one embodiment of the invention.
FIGS. 2A and 2B are views illustrative of a method that acquires moving path data using an image sensor, and recognizes an input shape input by a player.
FIG. 3 is a view illustrative of a shape recognition method according to one embodiment of the invention that utilizes a determination period.
FIG. 4 is a view illustrative of a shape recognition method according to one embodiment of the invention that utilizes a determination period.
FIGS. 5A to 5C are views illustrative of a determination period setting method.
FIGS. 6A to 6D are views illustrative of a determination period setting method.
FIGS. 7A and 7B are views illustrative of a method that utilizes a buffer.
FIGS. 8A to 8C illustrate an example in which a method according to one embodiment of the invention is applied to a quiz game.
FIGS. 9A to 9C are views illustrative of a reset condition.
FIG. 10 is a view illustrative of a method that acquires color image information and depth information using an image sensor.
FIG. 11 is a view illustrative of a method that calculates skeleton information about a player based on depth information.
FIGS. 12A and 12B are views illustrative of a method that specifies a part used as a shape input indicator using skeleton information.
FIG. 13 is a view illustrative of a method that recognizes an input shape using matching information obtained by a matching process in each determination period.
FIGS. 14A to 14D are views illustrative of a method that performs a shape recognition process on each part.
FIGS. 15A and 15B are views illustrative of a modification of one embodiment of the invention.
FIG. 16 is a flowchart illustrative of a process according to one embodiment of the invention.
FIG. 17 is a flowchart illustrative of a process according to one embodiment of the invention.
FIG. 18 is a flowchart illustrative of a process according to one embodiment of the invention.

### DESCRIPTION OF EXEMPLARY EMBODIMENTS

Several aspects of the invention may provide an image generation system, a shape recognition method, an information storage medium, and the like that can improve a shape recognition process on an input shape that has been input using a shape input indicator.

According to one embodiment of the invention, there is provided an image generation system comprising:
a moving path data acquisition section that acquires moving path data about a shape input indicator;
a moving path data storage section that stores the moving path data acquired by the moving path data acquisition section; and
a shape recognition section that performs a shape recognition process on an input shape that has been input using the shape input indicator based on the moving path data,
the shape recognition section performing the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

According to the above embodiment, the first to Nth determination periods are set so that the start timing of the (K+1)th determination period occurs after the start timing of the Kth determination period. The shape recognition process is performed on the input shape based on the moving path data about the shape input indicator in each of the first to Nth determination periods. Specifically, the first to Nth determination periods are set so that the first to Nth determination periods differ in start timing. This makes it possible to prevent a situation in which the shape input range is limited, or the operator cannot arbitrarily input a shape, so that the shape recognition process on the input shape can be improved.

In the image generation system,
the shape recognition section may perform the shape recognition process on the input shape while variably changing a length of the first to Nth determination periods.

This makes it possible to deal with a change in shape input speed of the operator, for example.

In the image generation system,
the shape recognition section may perform the shape recognition process on the input shape while setting the first to Nth determination periods so that the start timing of the (K+1)th determination period occurs after the start timing of the Kth determination period, and an end timing of each of the first to Nth determination periods is set to a current timing.

This makes it possible to set determination periods that differ in start timing and length, so that a shape recognition process suitable for a real-time process or the like can be implemented.

In the image generation system,
the moving path data storage section may include first to Nth buffers, a Kth buffer among the first to Nth buffers storing the moving path data in the Kth determination period among the first to Nth determination periods; and
the shape recognition section deleting the moving path data of which length corresponding to a period length tc2-tc1 from a head region of the first to Nth buffers when the current timing has changed from a timing tc1 to a timing tc2, and adding the moving path data obtained in a period from the timing tc1 to the timing tc2 to an end region of the first to Nth buffers.

This makes it possible to efficiently set determination periods that differ in start timing and length.

The image generation system may further comprise:
an information generation section that generates at least one of start instruction information and end notification information about the shape input using the shape input indicator.

This makes it possible to issue a shape input start instruction or a shape input end notification to the operator.

In the image generation system,
the shape recognition section may perform the shape recognition process on the input shape while setting the first to Nth determination periods based on an output timing of the start instruction information and an output timing of the end notification information.

This makes it possible to limit the determination period setting range, so that the processing load of the shape recognition process can be reduced, for example.

In the image generation system,
the shape recognition section may determine whether or not a shape recognition determination period reset condition has been satisfied, and may reset a determination period that has been set before the shape recognition determination period reset condition has been satisfied when the shape recognition determination period reset condition has been satisfied.

According to the above configuration, the determination period that has been set before the shape recognition determination period reset condition has been satisfied is reset when the shape recognition determination period reset condition has been satisfied, and the determination period can be newly set.

In the image generation system,
the shape recognition section may determine that the shape recognition determination period reset condition has been satisfied when a reset instruction input shape that instructs resetting a shape recognition determination period has been input using the shape input indicator.

This makes it possible to deal with a situation in which the operator who has performed a shape input halfway desires to cancel the shape input, for example.

In the image generation system,
the shape recognition section may determining whether or not the shape recognition determination period reset condition has been satisfied based on a motion vector of a moving path of the shape input indicator.

According to the above configuration, the determination period is not set in a period in which the operator obviously does not perform a shape input, so that the efficiency of the determination period setting process and the shape recognition process can be improved.

The image generation system may further comprise:
an image information acquisition section that acquires image information from an image sensor,
the moving path data acquisition section may acquire the moving path data based on the image information from the image sensor.

This makes it possible to acquire the moving path data by utilizing the image information from the image sensor.

In the image generation system,
the moving path data acquisition section may acquire skeleton information based on the image information from the image sensor, the skeleton information specifying a motion of an operator viewed from the image sensor, and may acquire the moving path data about the shape input indicator based on the acquired skeleton information, the shape input indicator being a part of the operator or a thing possessed by the operator.

This makes it possible to acquire the moving path data about a part (shape input indicator) of the operator or a thing (shape input indicator) possessed by the operator by effectively utilizing the skeleton information.

In the image generation system,
the moving path data acquisition section may specify a part of the operator used as the shape input indicator based on the skeleton information, and may acquire moving path data about the specified part as the moving path data about the shape input indicator.

This makes it possible to specify the part of the operator used as the shape input indicator, and acquire the moving path data by effectively utilizing the skeleton information.

In the image generation system,
the moving path data acquisition section may determine whether or not the moving path data is valid data based on the skeleton information.

This makes it possible to prevent a situation in which the shape recognition process is performed using invalid moving path data. Therefore, a situation in which the input shape is erroneously recognized can be prevented.

In the image generation system,
the shape recognition section may perform a matching process on the input shape that has been input using the shape input indicator and a candidate shape in each of the first to Nth determination periods, may store matching information in a matching information storage section, the matching information including a matching rate that is obtained by the matching process and linked to each candidate shape, and may perform the shape recognition process on the input shape based on the matching information obtained in the first to Nth determination periods.

This makes it possible to store the matching information during the matching process in each determination period, and perform the shape recognition process on the input shape based on the stored matching information.

In the image generation system,
the shape recognition section may perform the shape recognition process on the input shape by performing a matching process on the input shape and each of a plurality of parts of a candidate shape.

This makes it possible to implement an accurate (correct) shape recognition process even if the input shape is complex.

According to another embodiment of the invention, there is provided a shape recognition method that recognizes an input shape that has been input using a shape input indicator, the shape recognition method comprising:
acquiring moving path data about a shape input indicator;
storing the acquired moving path data in a moving path data storage section;
performing a shape recognition process on an input shape that has been input using the shape input indicator based on the moving path data; and
performing the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

According to another embodiment of the invention, there is provided a computer-readable information storage medium storing a program that causes a computer to execute the above shape recognition method.

Exemplary embodiments of the invention are described below. Note that the following exemplary embodiments do not in any way limit the scope of the invention laid out in the claims. Note that all elements of the following embodiments should not necessarily be taken as essential requirements for the invention.

### 1. Configuration

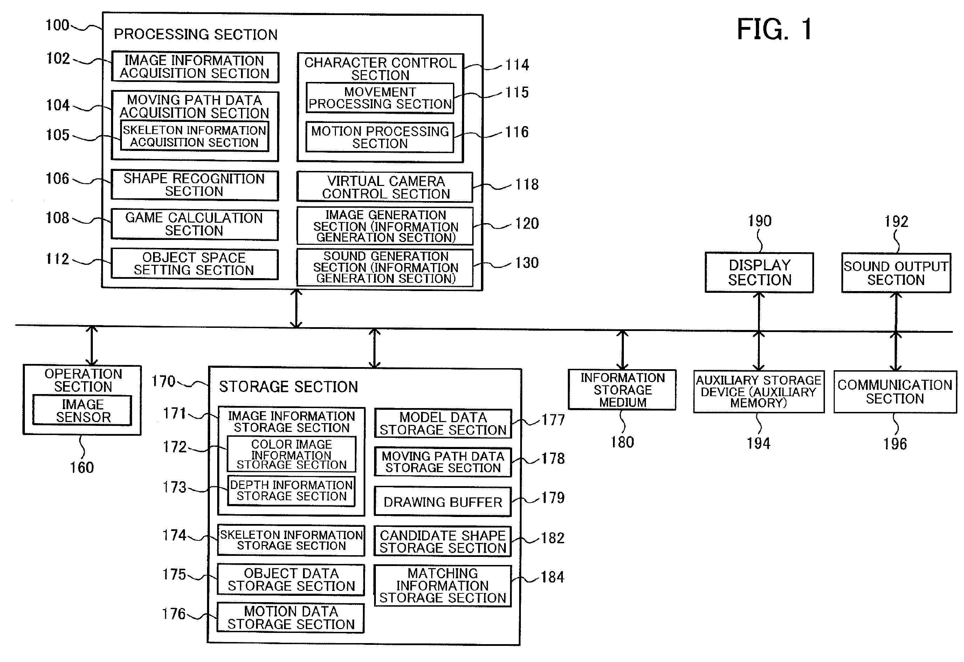

FIG. 1 shows an example of a block diagram of an image generation system (game device) according to one embodiment of the invention. Note that the image generation system according to one embodiment of the invention is not limited to the configuration shown in FIG. 1. Various modifications may be made, such as omitting some of the elements (sections) or adding other elements (sections).

An operation section 160 allows the player to input operation data. The function of the operation section 160 may be implemented by a direction key, an operation button, an analog stick, a lever, a sensor (e.g., angular speed sensor or acceleration sensor), a microphone, a touch panel display, or the like.

The operation section 160 also includes an image sensor that is implemented by a color image sensor, a depth sensor, or the like. Note that the function of the operation section 160 may be implemented by only the image sensor.

A storage section 170 serves as a work area for a processing section 100, a communication section 196, and the like. The function of the storage section 170 may be implemented by a RAM (DRAM or VRAM) or the like. A game program and game data that is necessary when executing the game program are stored in the storage section 170.

An information storage medium 180 (computer-readable medium) stores a program, data, and the like. The function of the information storage medium 180 may be implemented by an optical disk (CD or DVD), a hard disk drive (HDD), a memory (e.g., ROM), or the like. The processing section 100 performs various processes according to one embodiment of the invention based on a program (data) stored in the information storage medium 180. Specifically, a program that causes a computer (i.e., a device including an operation section, a processing section, a storage section, and an output section) to function as each section according to one embodiment of the invention (i.e., a program that causes a computer to execute the process of each section) is stored in the information storage medium 180.

A display section 190 outputs an image generated according to one embodiment of the invention. The function of the display section 190 may be implemented by an LCD, an organic EL display, a CRT, a touch panel display, a head mount display (HMD), or the like. A sound output section 192 outputs sound generated according to one embodiment of the invention. The function of the sound output section 192 may be implemented by a speaker, a headphone, or the like.

An auxiliary storage device 194 (auxiliary memory or secondary memory) is a storage device used to supplement the capacity of the storage section 170. The auxiliary storage device 194 may be implemented by a memory card such as an SD memory card or a multimedia card, or the like.

The communication section 196 communicates with the outside (e.g., another image generation system, a server, or a host device) via a cable or wireless network. The function of the communication section 196 may be implemented by hardware such as a communication ASIC or a communication processor, or communication firmware.

A program (data) that causes a computer to function as each section according to one embodiment of the invention may be distributed to the information storage medium 180 (or the storage section 170 or the auxiliary storage device 194) from an information storage medium included in a server (host device) via a network and the communication section 196. Use of the information storage medium included in the server (host device) is also included within the scope of the invention.

The processing section 100 (processor) performs a game process, an image generation process, a sound generation process, and the like based on operation data from the operation section 160, a program, and the like. The processing section 100 performs various processes using the storage section 170 as a work area. The function of the processing section 100 may be implemented by hardware such as a processor

(e.g., CPU or GPU) or an ASIC (e.g., gate array), or a program.

The processing section 100 includes an image information acquisition section 102, a moving path data acquisition section 104, a shape recognition section 106, a game calculation section 108, an object space setting section 112, a character control section 114, a virtual camera control section 118, an image generation section 120, and a sound generation section 130. The moving path data acquisition section 104 includes a skeleton information acquisition section 105, and the character control section 114 includes a movement processing section 115 and a motion processing section 116. Note that various modifications may be made, such as omitting some of these elements or adding other elements.

The image information acquisition section 102 acquires image information from the image sensor. For example, information about an image captured by the image sensor is stored in an image information storage section 171 included in the storage section 170. Specifically, information about a color image captured by the color image sensor of the image sensor is stored in a color image information storage section 172, and information about a depth image captured by the depth sensor of the image sensor is stored in a depth information storage section 173. The image information acquisition section 102 reads (acquires) the image information from the image information storage section 171.

The moving path data acquisition section 104 acquires moving path data about a shape input indicator. The shape input indicator is a thing (object) used to input a shape such as a character, a symbol (mark or sign), or a signal (sign). For example, the shape input indicator is a part (e.g., hand (finger), leg (foot), or hips) of the operator (player), or a thing (e.g., pen or pointer) possessed by the operator. The moving path data indicates a path drawn by points indicated by the shape input indicator. For example, the moving path data is XY coordinate data about the path viewed from the image sensor, or the like. For example, the XY coordinate data or the like about a point indicated by the shape input indicator is detected in each frame in which the image information from the image sensor is acquired. Data in which the detected XY coordinate data or the like is linked to each frame is stored in a moving path data storage section 178 as the moving path data. A change in coordinates in each frame period may be stored as vector data, and vector change information may be stored in the moving path data storage section 178 as the moving path data.

The shape recognition section 106 performs a shape recognition process on an input shape. For example, the shape recognition section 106 performs the shape recognition process on an input shape based on the moving path data.

The game calculation section 108 performs a game calculation process. The game calculation process includes starting the game when game start conditions have been satisfied, proceeding with the game, calculating the game results, and finishing the game when game finish conditions have been satisfied, for example.

The object space setting section 112 sets an object space where a plurality of objects are disposed. For example, the object space setting section 112 disposes an object (i.e., an object formed by a primitive surface such as a polygon, a free-form surface, or a subdivision surface) that represents a display object such as a character (e.g., human, animal, robot, car, ship, or airplane), a map (topography), a building, a course (road), a tree, or a wall in the object space. Specifically, the object space setting section 112 determines the position and the rotation angle (synonymous with orientation or direction) of the object in a world coordinate system, and disposes the object at the determined position (X, Y, Z) and the determined rotation angle (rotation angles around X, Y, and Z axes). More specifically, an object data storage section 175 included in the storage section 170 stores an object number, and object data (e.g., the position, rotation angle, moving speed, and moving direction of the object (part object)) that is linked to the object number. The object space setting section 112 updates the object data every frame, for example.

The character control section 114 controls the character that moves (make a motion) in the object space. For example, the movement processing section 115 included in the character control section 114 moves the character (model object or moving object). The movement processing section 115 moves the character in the object space based on the operation information input by the player using the operation section 160, a program (movement algorithm), various types of data (motion data), and the like. More specifically, the movement processing section 115 performs a simulation process that sequentially calculates movement information (position, rotation angle, speed, or acceleration) about the character every frame (e.g., 1/60th of a second). The term "frame" refers to a time unit used when performing a movement process, a motion process, and an image generation process.

The motion processing section 116 included in the character control section 114 performs a motion process (motion replay or motion generation) that causes the character to make a motion (animation). The motion process may be implemented by reproducing the motion of the character based on motion data stored in a motion data storage section 176, for example.

Specifically, the motion data storage section 176 stores the motion data including the position or the rotation angle (i.e., the rotation angles of a child bone around three axes with respect to a parent bone) of each bone that forms the skeleton of the character (model object) (i.e., each part object that forms the character). A model data storage section 177 stores model data about the model object that indicates the character. The motion processing section 116 reproduces the motion of the character by reading the motion data from the motion data storage section 176, and moving each bone (part object) that forms the skeleton (i.e., changing the shape of the skeleton) based on the motion data.

The virtual camera control section 118 controls a virtual camera (viewpoint or reference virtual camera) for generating an image viewed from a given (arbitrary) viewpoint in the object space. Specifically, the virtual camera control section 118 controls the position (X, Y, Z) or the rotation angle (rotation angles around X, Y, and Z axes) of the virtual camera (i.e., controls the viewpoint position, the line-of-sight direction, or the angle of view).

For example, when photographing the character from behind using the virtual camera, the virtual camera control section 118 controls the position or the rotation angle (direction) of the virtual camera so that the virtual camera follows a change in the position or the rotation of the character. In this case, the virtual camera control section 118 may control the virtual camera based on information (e.g., position, rotation angle, or speed) about the character obtained by the movement processing section 115. Alternatively, the virtual camera control section 118 may rotate the virtual camera by a predetermined rotation angle, or may move the virtual camera along a predetermined path. In this case, the virtual camera control section 118 controls the virtual camera based on virtual camera data that specifies the position (moving path) or the rotation angle of the virtual camera.

The image generation section 120 performs a drawing process based on the results of various processes (game process and simulation process) performed by the processing section 100 to generate an image, and outputs the generated image to the display section 190. Specifically, the image generation section 120 performs a geometric process (e.g., coordinate transformation (world coordinate transformation and camera coordinate transformation), clipping, perspective transformation, or light source process), and generates drawing data (e.g., primitive surface vertex position coordinates, texture coordinates, color data, normal vector, or alpha-value) based on the results of the geometric process. The image generation section 120 draws the object (one or more primitive surfaces) subjected to perspective transformation in a drawing buffer 179 (i.e., a buffer (e.g., frame buffer or work buffer) that can store image information in pixel units) based on the drawing data (primitive surface data). The image generation section 120 thus generates an image viewed from the virtual camera (given viewpoint) in the object space. The drawing process may be implemented by a vertex shader process or a pixel shader process.

The image generation section 120 may generate a stereoscopic image. In this case, a left-eye virtual camera and a right-eye virtual camera are disposed using a reference virtual camera position and a reference inter-camera distance. The image generation section 120 generates a left-eye image viewed from the left-eye virtual camera in the object space, and generates a right-eye image viewed from the right-eye virtual camera in the object space. Stereoscopic vision may be implemented by a stereoscopic glass method or a naked-eye method using a lenticular lens or the like by utilizing the left-eye image and the right-eye image.

The sound generation section 130 performs a sound process based on the results of various processes performed by the processing section 100 to generate game sound (e.g., background music (BGM), effect sound, or voice), and outputs the generated game sound to the sound output section 192.

The moving path data acquisition section 104 acquires the moving path data about the shape input indicator (e.g., the hand of the operator). The moving path data storage section 178 stores the moving path data acquired by the moving path data acquisition section 104. The shape recognition section 106 performs the shape recognition process on the input shape that is input using the shape input indicator based on the moving path data.

Specifically, the shape recognition section performs the shape recognition process on the input shape (i.e., the shape of a character, a symbol, or the like) that has been input using the shape input indicator based on the moving path data in each of first to Nth determination periods. The first to Nth determination periods are set so that the start timing of the (K+1)th determination period occurs after the start timing of the Kth (1≤K<N) determination period. For example, the shape recognition section 106 reads the moving path data about the shape input indicator in each determination period from the moving path data storage section 178, and performs the shape recognition process on the input shape in each determination period based on the moving path data read from the moving path data storage section 178.

In this case, the shape recognition section 106 may perform the shape recognition process while variably changing the length of the first to Nth determination periods. For example, the shape recognition section 106 performs the first shape recognition process on the input shape while setting the first to Nth determination periods to have a first length, and performs the subsequent shape recognition process while setting the first to Nth determination periods to have a second length that is shorter than the first length.

The shape recognition section 106 may perform the shape recognition process while setting the first to Nth determination periods so that the start timing of the (K+1)th determination period occurs after the start timing of the Kth determination period, and the end timing of each determination period is set to the current timing (current frame). This makes it possible to implement a real-time shape recognition process while changing the length of the first to Nth determination periods.

In this case, the moving path data storage section 178 may include first to Nth buffers. The Kth buffer among the first to Nth buffers stores the moving path data in the Kth determination period among the first to Nth determination periods.

The shape recognition section 106 deletes the moving path data of which length corresponding to a period length tc2-tc1 from the head region (head address) of the first to Nth buffers when the current timing has changed from tc1 to tc2. The shape recognition section 106 adds the moving path data obtained in a period from the timing tc1 to the timing tc2 to the end region (end address) of the first to Nth buffers. This makes it possible to update the moving path data stored in the first to Nth buffers by performing a minimum deletion process and a minimum addition process.

The image generation section 120 or the sound generation section 130 (information generation section in a broad sense) generates at least one of start instruction information and end notification information about shape input using the shape input indicator. For example, the image generation section 120 generates a shape input start instruction image or a shape input end notification image. The sound generation section 130 generates a shape input start instruction sound (voice or music) or a shape input end notification sound.

In this case, the shape recognition section 106 performs the shape recognition process on the input shape while setting the first to Nth determination periods based on the output timing of the start instruction information and the output timing of the end notification information. Specifically, the shape recognition section 106 performs the shape recognition process while setting the first to Nth determination periods based on the output timing of the shape input start instruction image/sound and the output timing of the shape input end notification image/sound. In this case, the first to Nth determination periods may be set within a period between the output timing of the start instruction information and the output timing of the end notification information, or may be set outside a period between the output timing of the start instruction information and the output timing of the end notification information.

The shape recognition section 106 determines whether or not a shape recognition determination period reset condition has been satisfied. The shape recognition section 106 resets the determination periods that have been set before the shape recognition determination period reset condition has been satisfied when the shape recognition determination period reset condition has been satisfied. For example, the shape recognition section 106 resets the shape recognition process based on the moving path data in the determination periods before the shape recognition determination period reset condition has been satisfied. Specifically, the shape recognition section 106 determines that the shape recognition determination period reset condition has been satisfied when a reset instruction input shape that instructs resetting the shape recognition determination period (e.g., the shape of a symbol that instructs resetting the shape recognition determination periods) has been input using the shape input indicator. Alternatively, the shape recognition section 106 may determine whether or not the reset condition has been satisfied based on the motion vector (i.e., the magnitude and the direction of the vector) of the moving path of the shape input indicator. The determination periods that have been set before the reset condition has been satisfied are reset when the shape recognition process has been reset, and the determination periods are newly set. The moving path data in the determination periods before the reset condition has been satisfied is excluded from the target of the shape recognition process (e.g., deleted).

When the image information acquisition section 102 has acquired the image information from the image sensor, the moving path data acquisition section 104 acquires the moving path data based on the image information from the image sensor. For example, the moving path data acquisition section 104 performs an image recognition process on the image information from the image sensor to detect the moving path of the shape input indicator, and stores the detected moving path data in the moving path data storage section 178.

The moving path data acquisition section 104 acquires skeleton information that specifies the motion of the operator viewed from the image sensor based on the image information from the image sensor. The skeleton information acquisition section 105 acquires the skeleton information. The moving path data acquisition section 104 acquires the moving path data about a part (e.g., hand) of the operator or a thing (e.g., pen) possessed by the operator based on the acquired skeleton information. Specifically, the moving path data acquisition section 104 specifies a part of the operator used as the shape input indicator based on the skeleton information, and acquires the moving path data about the specified part as the moving path data about the shape input indicator. Specifically, the skeleton information is used to specify the part of the right hand used as the shape input indicator.

The skeleton information specifies the motion of the operator viewed from the image sensor, for example. Specifically, the skeleton information includes a plurality of pieces of joint position information corresponding to a plurality of joints of the operator, each of the plurality of pieces of joint position information including three-dimensional coordinate information. Each joint connects bones, and a skeleton is formed by connecting a plurality of bones.

The moving path data acquisition section 104 may determine whether or not the moving path data is valid data based on the skeleton information. For example, the moving path data acquisition section 104 determines that the moving path data is invalid data when it has been determined that the part of the operator used as the shape input indicator is not present in an area appropriate for inputting the input shape based on the skeleton information, or it has been determined that the moving speed of the part of the operator is too high, or the moving direction of the part of the operator is not appropriate, based on the skeleton information.

The moving path data acquisition section 104 may acquire depth information about a part of the player based on the image information from the image sensor, and may determine whether or not the moving path data is valid data based on the acquired depth information. For example, the depth information about the operator is acquired using a depth sensor (i.e., image sensor). The moving path data acquisition section 104 determines that the moving path data is invalid data when it has been determined that the depth value (Z-value) of the part of the operator is not within an appropriate depth range.

The shape recognition section 106 performs a matching process on the input shape that has been input using the shape input indicator and a candidate shape in each of the first to Nth determination periods. For example, a candidate shape storage section 182 stores a plurality of candidate shapes (candidate shape patterns) (e.g., a linear candidate shape and curved candidate shapes that differ in curvature). The shape recognition section 106 performs a matching process that calculates the matching rate between each candidate shape and the input shape (partial input shape). The shape recognition section 106 stores matching information, in which the matching rate obtained by the matching process is linked to each candidate shape, in the matching information storage section 184. The shape recognition section 106 performs the shape recognition process on the input shape (entire input shape) based on the matching information obtained in the first to Nth determination periods and stored in the matching information storage section 184. Data in which XY coordinate data or the like that specifies the candidate shape is linked to each frame is stored in a candidate shape storage section 182 as candidate shape data. A change in coordinates of the candidate shape in each frame period may be stored as vector information, and the vector change information may be stored in the candidate shape data storage section 182 as the candidate shape data.

The shape recognition section 106 may perform the shape recognition process on the input shape by performing the matching process on the input shape and each of a plurality of parts of the candidate shape. For example, when the candidate shape of a character is formed by a plurality of parts, the shape recognition section 106 performs the shape recognition process on the input shape and each part to determine the character. When the candidate shape of a symbol is formed by a plurality of parts, the shape recognition section 106 performs the shape recognition process on the input shape and each part to determine the symbol.

### 2. Method

A method according to one embodiment of the invention is described in detail below.

### 2.1 Shape recognition using first to Nth determination periods

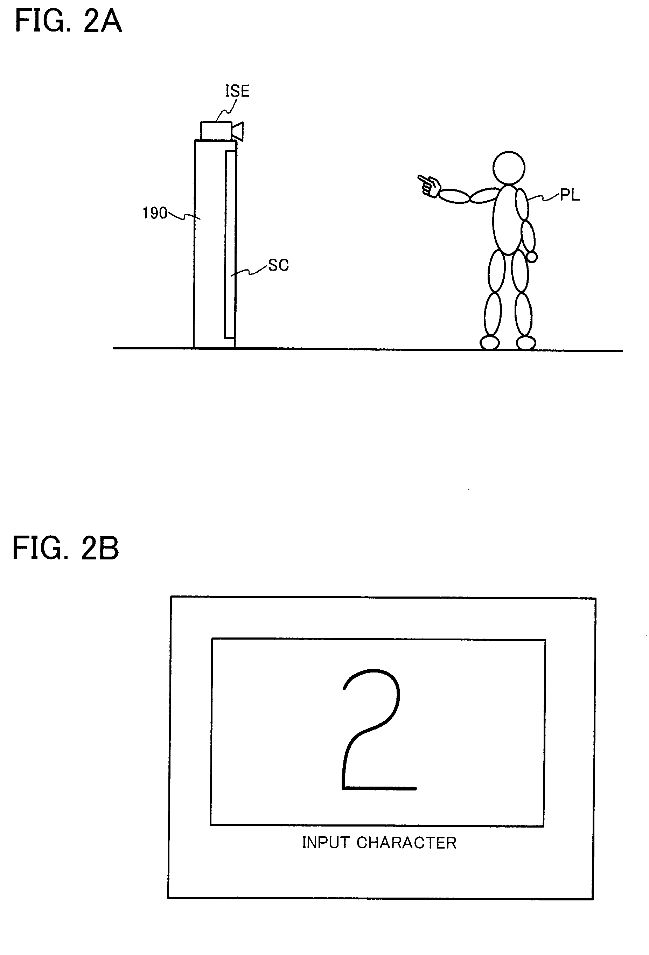

In FIG. 2A, an image sensor ISE that is implemented by a depth sensor (e.g., infrared sensor) and a color image sensor (RGB sensor (e.g., CCD or CMOS sensor)) is installed at a position corresponding to the display section 190. The image sensor ISE is installed so that its imaging direction (optical axis direction) coincides with the direction from the display section 190 to a player PL, for example. The image sensor ISE acquires (captures) color image information and depth information about the player PL viewed from the display section 190. The image sensor ISE may be provided in the display section 190, or may be provided as an external element (component).

The motion of the hand (shape input indicator in a broad sense) of the player PL (operator in a broad sense) is recognized based on the image information obtained by the image sensor ISE to acquire the moving path data about the hand (finger). For example, the XY coordinates of the moving path of the hand viewed from the image sensor ISE are acquired as the moving path data.

The input shape that has been input by the player PL with the hand is recognized based on the acquired moving path data. In FIG. 2B, it is recognized that the player PL has input a character "2" (input shape in a broad sense), for example.

The following description mainly illustrates an example in which the shape input indicator is the hand (finger) of the player, and the input shape is the shape of a character. Note that the invention is not limited thereto. The shape input indicator may be a part of the player other than the hand, or may be a thing (e.g., pen or pointer) possessed by the player. The input shape may be a shape other than a character. For example, the input shape may be a symbol or the like that is used to issue a game instruction or the like. The following description illustrates an example in which one embodiment of the invention is applied to a game device that allows the player to play the game. Note that embodiments of the invention may also be applied to an image generation system (e.g., television set, recorder (e.g., HDD recorder), or home electric appliance) that is operated by the operator, for example. In FIGS. 2A and 2B, the moving path data about the shape input indicator (e.g., hand) is acquired based on the image information from the image sensor. Note that the moving path data may be acquired using a motion sensor (e.g., six-axis sensor). For example, the moving path data may be acquired by detecting the position coordinates of the hand of the player based on acceleration information or angular acceleration information obtained by a motion sensor attached to the hand of the player. Alternatively, a light-emitting section may be provided in an operation device (e.g., controller), and the moving path data about the light-emitting section (i.e., the moving path data about the emission color of the light-emitting section) may be acquired. In this case, it is desirable that the emission color of the light-emitting section of a first operation device possessed by a first player differ from the emission color of the light-emitting section of a second operation device possessed by a second player. This makes it possible to easily determine the player who has input the moving path data when implementing a multi-player game.

When recognizing a character using a touch panel or the like, the shape recognition process can be relatively easily implemented since the motion of the finger is limited to a two-dimensional motion.

However, when recognizing the shape of a character based on the moving path of the hand (finger) that makes a motion in a three-dimensional space (see FIG. 2A), the character may not be accurately recognized when directly applying the character recognition method used for a touch panel or the like.

As a comparative example, the motion range of the hand of the player may be limited to a two-dimensional range to implement character recognition. For example, the player is instructed to stretch and move the hand when inputting a character. The player stretches the hand, and inputs a character within a virtual character input range that is set in front of the player.

According to the comparative example, however, since the character input range is limited (i.e., the player cannot arbitrarily input a character), convenience to the player is impaired.

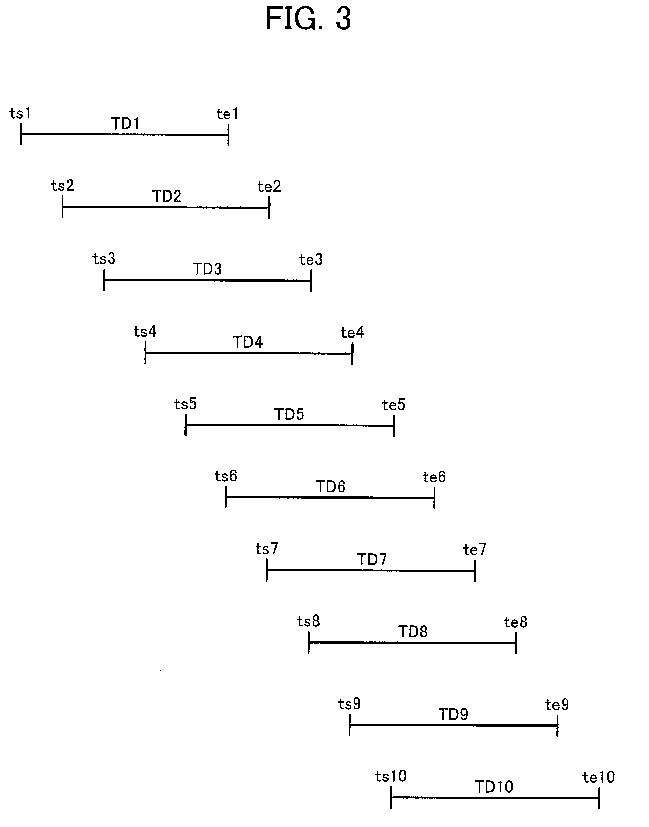

According to one embodiment of the invention, determination periods TD1 to TD10 (first to Nth determination periods in a broad sense) shown in FIG. 3 are set, and used to recognize the input shape (e.g., character).

As shown in FIG. 3, a start timing ts2 of the determination period TD2 ((K+1)th determination period) occurs after a start timing ts1 of the determination period TD1 (Kth determination period). A start timing ts3 of the determination period TD3 ((K+1)th determination period) occurs after the start timing ts2 of the determination period TD2 (Kth determination period). Specifically, the determination periods TD1 to TD10 differ in start timing in time series.

A shape (e.g., character) recognition process is performed based on the moving path data about the hand or the like in each of the determination periods TD1 to TD10.

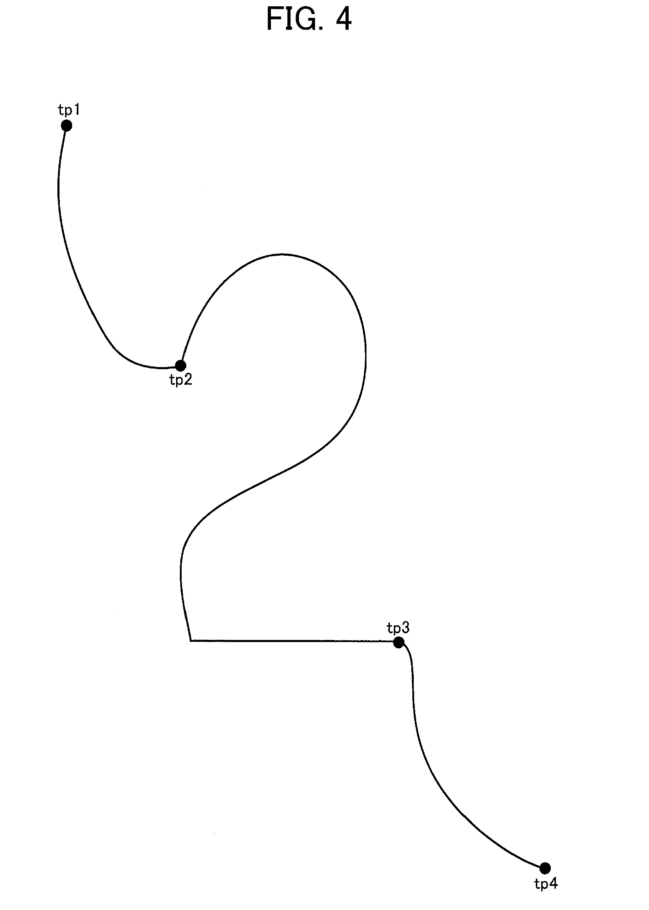

FIG. 4 shows an example of the moving path of the hand of the player. When the player has input a character as shown in FIG. 2A, the player has actually input the character "2" in a period from a timing tp2 to a timing tp3. The player has stretched the hand in a period (preparation period) from a timing tp1 to the timing tp2 in order to input the character "2", for example. The player has returned the hand in a period (finish period) from the timing tp3 to a timing tp4 after inputting the character "2". Therefore, the character cannot be correctly recognized if the character shape recognition process is performed in a period from the timing tp1 to the timing tp2 or a period from the timing tp3 to the timing tp4.

According to one embodiment of the invention, the determination periods TD1 to TD10 differ in start timing in time series (see FIG. 3). Therefore, the shape of the character "2" can be correctly recognized when one of the determination periods TD1 to TD10 is set corresponding to a period from the timing tp2 to the timing tp3. Therefore, even if the player has made a preparation motion in a period from the timing tp 1 to the timing tp2, or has made a finish motion in a period from the timing tp3 to the timing tp4, the character input by the player in a period from the timing tp2 to the timing tp3 can be recognized. This makes it possible to prevent a situation in which the character input range is limited, or the player cannot arbitrarily input a character (refer to the comparative example), so that convenient shape recognition can be implemented.

When the player inputs a character "2" as shown in FIG. 2A, the moving speed of the hand differs depending on the player. Therefore, the period in which the player inputs the character "2" (i.e., a period from the timing tp2 to the timing tp3) in FIG. 4 increases if the moving speed of the hand is low, and decreases if the moving speed of the hand is high. Accordingly, if the determination periods TD1 to TD10 are fixed, it may be difficult to deal with such a change in character input speed.

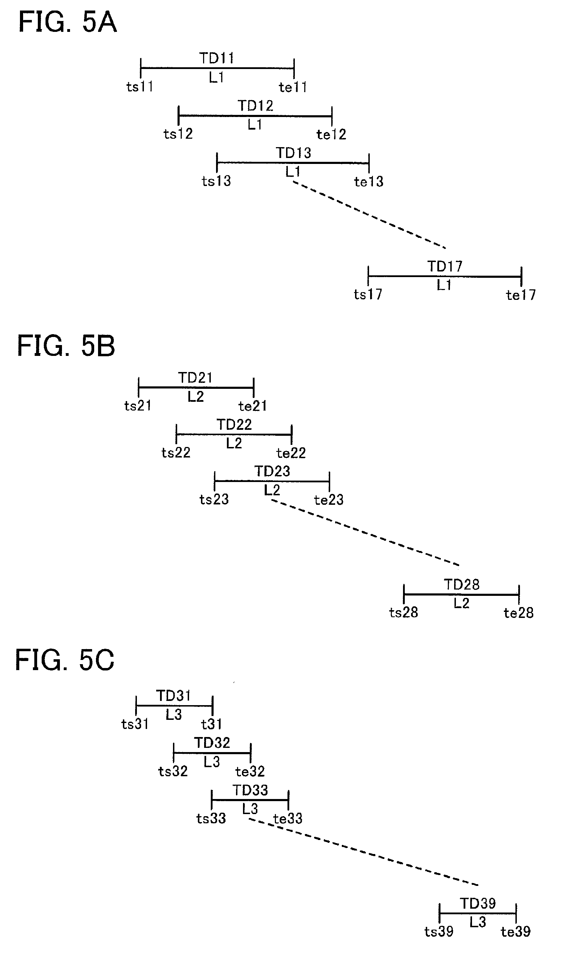

FIGS. 5A to 5C illustrate a method in which the shape recognition process is performed while variably changing the determination periods TD1 to TD10 (first to Nth determination periods).

As shown in FIG. 5A, the shape recognition process is performed in each of determination periods TD11 to TD17 (length: L1) that differ in start timing.

As shown in FIG. 5B, the shape recognition process is then performed in each of determination periods TD21 to TD28 (length: L2) that differ in start timing. The length L2 of the determination periods TD21 to TD28 is shorter than the length L1 of the determination periods TD11 to TD17 shown in FIG. 5A.

As shown in FIG. 5C, the shape recognition process is then performed in each of determination periods TD31 to TD39 (length: L3) that differ in start timing. The length L3 of the determination periods TD31 to TD39 is shorter than the length L2 of the determination periods TD21 to TD28 shown in FIG. 5B. In FIGS. 5A to 5C, the length of the determination periods is gradually reduced. Note that the configuration according to one embodiment of the invention is not limited thereto. Various modifications may be made, such as gradually increasing the length of the determination periods.

According to the method shown in FIGS. 5A to 5C, the shape recognition process can be implemented based on the moving path data in each determination period while changing the length of the determination period. This makes it possible to deal with a change in character input speed of the player, for example.

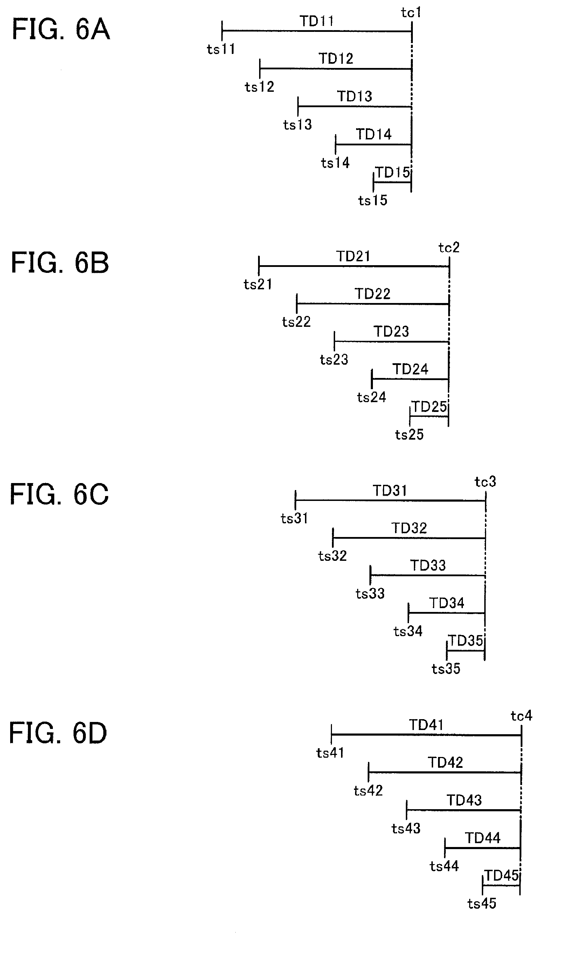

FIGS. 6A to 6D illustrate another example of the determination period setting method. In FIGS. 6A to 6D, the current timing changes in order from tc1 to tc4.

As shown in FIG. 6A, determination periods TD11 to TD15 are set when the current timing is tc1. In FIG. 6A, a start timing ts12 of the determination period TD12 ((K+1)th determination period) occurs after a start timing ts11 of the determination period TD11 (Kth determination period). This also applies to the relationship between the determination periods TD13 and TD12, the relationship between the determination periods TD14 and TD13, and the relationship between the determination periods TD15 and TD14. In FIG. 6A, the determination periods TD11 to TD15 end at the current timing tc1. Specifically, the determination periods TD11 to TD15 are set so that the determination periods TD11 to TD15 differ in length and end at the current timing tc1. The shape recognition process (i.e., a matching process with a candidate shape) is performed based on the moving path data about the hand or the like in each of the determination periods TD11 to TD15.

As shown in FIG. 6B, determination periods TD21 to TD25 are set when the current timing is tc2. In FIG. 6B, a start timing ts22 of the determination period TD22 ((K+1)th determination period) occurs after a start timing ts21 of the determination period TD21 (Kth determination period). This also applies to the relationship between the other determination periods. In FIG. 6B, the determination periods TD21 to TD25 end at the current timing tc2. The shape recognition process is performed based on the moving path data in each of the determination periods TD21 to TD25.

FIG. 6C shows an example in which the current timing is tc3, and FIG. 6D shows an example in which the current timing is tc4. The determination period setting method is the same as in FIGS. 6A and 6B.

According to the method shown in FIGS. 6A to 6D, determination periods that differ in start timing and length can be set in the same manner as in FIGS. 5A to 5C. Specifically, the determination periods TD11, TD21, TD31, and TD41 shown in FIGS. 6A to 6D correspond to the determination periods TD11 to TD17 shown in FIG. 5A. The determination periods TD12, TD22, TD32, and TD42 shown in FIGS. 6A to 6D correspond to the determination periods TD21 to TD28 shown in FIG. 5B. The determination periods TD13, TD23, TD33, and TD43 shown in FIGS. 6A to 6D correspond to the determination periods TD31 to TD39 shown in FIG. 5C.

The method shown in FIGS. 6A to 6D is suitable for a real-time process since the shape recognition process is performed in a state in which the determination periods are set based on the timings tc1 to tc4.

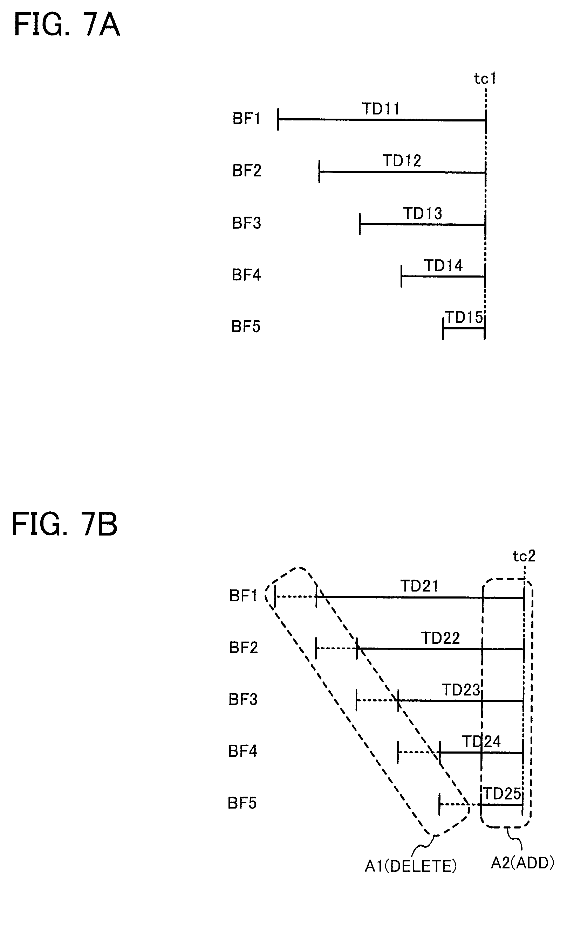

FIGS. 7A and 7B are views illustrative of a method that improves the efficiency of the process using a buffer when using the method shown in FIGS. 6A to 6D.

Buffers BF1 to BF5 (first to Nth buffers) shown in FIGS. 7A and 7B are included in the moving path data storage section 178 shown in FIG. 1. For example, the buffer BF1 (Kth buffer) stores the moving path data in the determination period TD1 (Kth determination period). Likewise, the buffers BF2, BF3, BF4, and BF5 store the moving path data in the determination periods TD2, TD3, TD4, and TD5, respectively.

FIG. 7A shows an example in which the current timing is tc1, and FIG. 7B shows an example in which the current timing is tc2.

When the current timing has changed from tc1 to tc2, the moving path data of which length corresponding to a period length tc2-tc1 is deleted from the head region of the buffers BF1 to BF5 (see A1 in FIG. 7B). Specifically, the moving path data that has become unnecessary is deleted from the buffers BF1 to BF5.

The moving path data obtained in a period from the timing tc1 to the timing tc2 is added to the end region of the buffers BF1 to BF5 (see A2 in FIG. 7B). Specifically, the moving path data newly obtained in a period from the timing tc1 to the timing tc2 is added to the end region of each of the buffers BF1 to BF5.

This makes it possible to store the moving path data necessary for each determination period in the buffers BF1 to BF5 by merely performing the moving path data deletion process (see A1) and the moving path data addition process (see A2) at each determination timing (e.g., tc1 and tc2). Therefore, the process shown in FIGS. 6A to 6D can be efficiently implemented, so that the process efficiency can be improved.

### 2.2 Application example of game

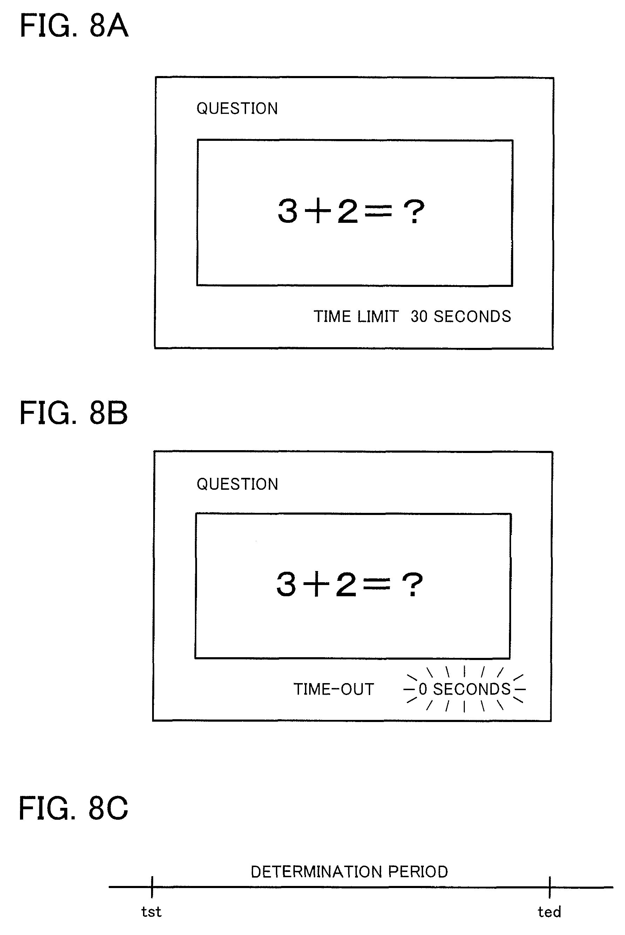

An example in which the method according to one embodiment of the invention is applied to various games is described below. FIGS. 8A to 8C are views showing an example in which the method according to one embodiment of the invention is applied to a quiz game. In the quiz game, a question is set, and the player answers the question by inputting a character as shown in FIG. 2A.

In FIG. 8A, an image that instructs the player to answer the question "3+2" by inputting a character is displayed on the display section 190. Specifically, an image (start instruction information in a broad sense) that instructs the player to input a character (input shape) with the hand (shape input indicator) is generated, and displayed on (output to) the display section 190. The image shown in FIG. 8A also instructs the player to input the answer character within 30 seconds (i.e., time limit).

In FIG. 8B, an image that notifies the player that the time limit has elapsed (i.e., the character input period has ended) is displayed on the display section 190. Specifically, an image (end notification information in a broad sense) that notifies the player that the input period of a character (input shape) with the hand (shape input indicator) has ended is generated, and displayed on (output to) the display section 190.

In FIG. 8C, determination periods (e.g., TD1 to TD10) are set based on an output timing tst of the start instruction image (start instruction information) shown in FIG. 8A and an output timing ted of the end notification image (end notification information) shown in FIG. 8B, and the shape recognition process is performed on the input shape. Specifically, the determination periods (e.g., TD1 to TD10) shown in FIGS. 3 to FIG. 6D are set between the output timings tst and ted shown in FIG. 8C, for example. Note that the start timing of the determination periods may occur before the output timing tst of the start instruction image to some extent, or the end timing of the determination periods may occur after the output timing ted of the end notification image to some extent.

According to the method shown in FIGS. 8A to 8C, the determination period setting range can be limited to a certain period using the output timings tst and ted. Therefore, the range in which the determination periods are shifted (see FIG. 3, for example) is limited, so that the processing load can be reduced.

Specifically, the range in which the determination periods are shifted increases as the determination period setting range increases, so that the number of determination periods increases. Since the range in which the determination periods are shifted and the number of determination periods decrease as a result of limiting the determination period setting range using the method shown in FIGS. 8A to 8C, the processing load can be reduced.

FIGS. 8A and 8B show an example in which the start instruction information and the end notification information are output using an image. Note that the start instruction information and the end notification information may be output using sound (e.g., voice or music). For example, the character input start instruction or the character input end notification may be presented to the player using voice or the like.

FIGS. 8A to 8C show an example in which the method according to one embodiment of the invention is applied to the quiz game. Note that the game to which the method according to one embodiment of the invention is applied is not limited thereto. The method according to one embodiment of the invention may also be applied to various games such as a music game, an action game, and an RPG game.

For example, when applying the method according to one embodiment of the invention to a music game, the player inputs a character or a symbol as shown in FIG. 2A within an input period until second sound (second rhythm) is output after first sound (first rhythm) has been output. When the player has input the instructed character or symbol within the input period, points are added to the score of the player. In this case, the output timing of the first sound corresponds to the output timing tst of the start instruction shown in FIG. 2C, and the output timing of the second sound corresponds to the output timing ted of the end notification.

It may be determined whether or not the moving path of the shape input indicator has moved along a given path, and effect information corresponding to the given path may be output when it has been determined that the moving path of the shape input indicator has moved along the given path. Specifically, a matching process is performed on the moving path of the shape input indicator and a given path pattern, and an effect image or an effect sound linked to the path pattern is output when it has been determined that the moving path of the shape input indicator coincides with the path pattern. According to this configuration, various effect images or effect sounds are output depending on the moving path input by the player, so that a novel game effect (production) can be implemented.

### 2.3 Resetting of determination period

When implementing a character input process by detecting a three-dimensional moving path of the hand of the player (see FIG. 2A), it is considered that the player normally makes a motion other than a character input motion with the hand. It is useless to perform the shape recognition process based on the determination periods (see FIG. 3, for example) in a period in which the player makes a motion other than a character input motion. Therefore, it is desirable to reset the determination periods. The player who has input a character or the like halfway may desire to cancel the input character, and input another character.

In order to deal with such a situation, whether or not a shape recognition determination period reset condition has been satisfied is determined. When the reset condition has been satisfied, the determination periods are reset, and the shape recognition process based on the moving path data in the reset determination periods is also reset.

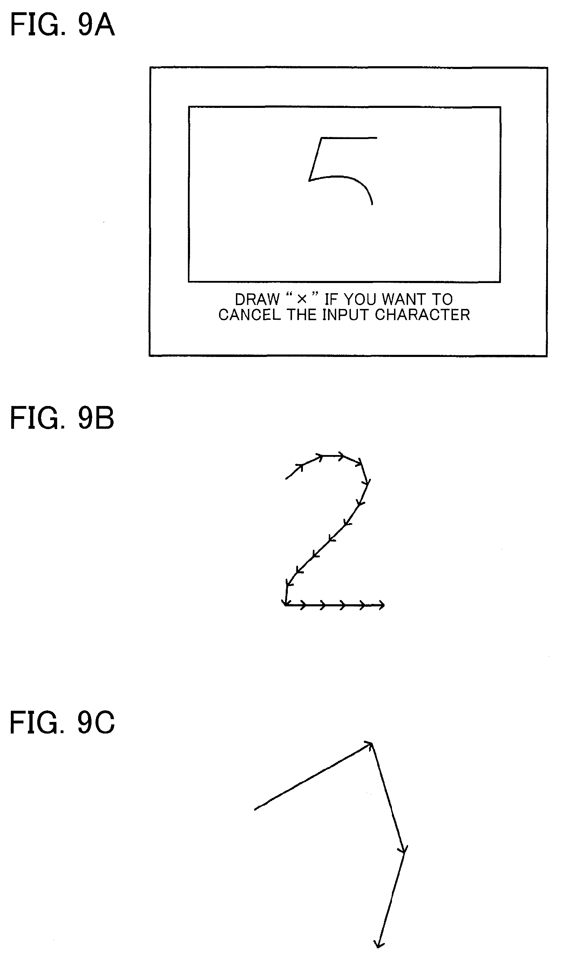

Various conditions may be used as the reset condition. In FIG. 9A, the player has input the shape of a character "5" halfway, for example. When the player desires to cancel the input character, the player can cancel the input character by inputting the shape of a symbol "×". In this case, the symbol "×" is a reset instruction input shape that instructs resetting the shape recognition determination period. It is determined that the reset condition has been satisfied when the player has input the shape of the symbol "×" with the hand as shown in FIG. 2A.

When the player has input the shape of the symbol "×", the determination period reset condition is satisfied, and the determination periods are reset. The moving path data about the character "5" shown in FIG. 9A is excluded from the target of the shape recognition process, and the determination periods as shown in FIG. 3 are newly set. The shape recognition process is then performed on a character input after the reset condition has been satisfied using the moving path data in the newly set determination periods.

As shown in FIGS. 9B and 9C, whether or not the reset condition has been satisfied may be determined based on the motion vector of the moving path of the hand (shape input indicator) of the player. In FIG. 9B, the magnitude and the direction of the motion vector of the moving path of the hand of the player are within an allowable range. In this case, the reset condition is not satisfied.

In FIG. 9C, the magnitude and the direction of the motion vector of the moving path of the hand of the player are outside an allowable range. Specifically, the magnitude of the motion vector exceeds a given threshold value, and a change in direction of the motion vector exceeds a change threshold value. In this case, since it is considered that the player has not input the shape of a character, it is determined that the reset condition has been satisfied. Therefore, the determination periods are reset, and the moving path data in the reset determination periods is excluded from the target of the shape recognition process. According to the above configuration, the determination period is not set in a period in which the player obviously does not input a character, so that the efficiency of the determination period setting process and the shape recognition process can be improved.

Note that the motion vector is defined as a vector that connects plot points when the moving path of the shape input indicator (e.g., the hand of the player) is plotted versus (unit) time. The reset instruction input shape is not limited to the symbol "×" shown in FIG. 9A. Various shapes (e.g., symbol or character) may also be used as the reset instruction input shape.

### 2.4 Skeleton information

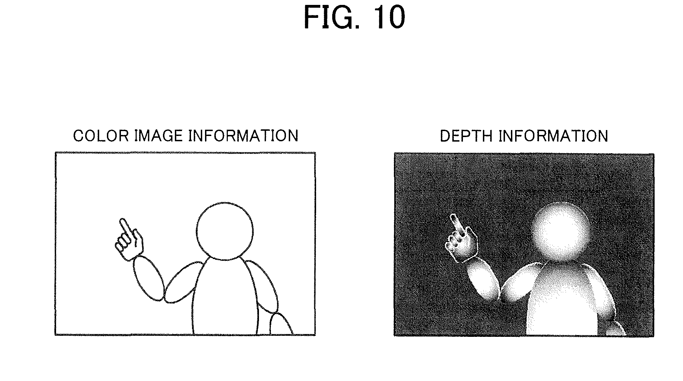

When the image sensor ISE shown in FIG. 2A includes a color image sensor and a depth sensor, color image information and depth information shown in FIG. 10 can be obtained. For example, the color image information includes color information about the player and his surroundings. The depth information includes the depth values of the player and his surroundings as grayscale values, for example. The color image information may be image information in which the color value (RGB) is set to each pixel position, and the depth information may be image information in which the depth value is set to each pixel position, for example. Note that the image sensor ISE may be a sensor in which the depth sensor and the color image sensor are separately provided, or may be a sensor in which the depth sensor and the color image sensor are integrated.

The depth information may be acquired by a known method. For example, the depth information is acquired by emitting light (e.g., infrared radiation) from the image sensor ISE (depth sensor), and detecting the reflection intensity or the time of flight of the emitted light to detect the shape of the object (e.g., player PL) viewed from the position of the image sensor ISE. The depth information is indicated by grayscale data (e.g., an object positioned near the image sensor ISE is bright, and an object positioned away from the image sensor ISE is dark). Note that the depth information may be acquired in various ways. For example, the depth information (i.e., information about the distance from the object) may be acquired simultaneously with the color image information using a CMOS sensor or the like. The depth information may also be acquired using a distance sensor (ranging sensor) or the like that utilizes ultrasonic waves, for example.

The moving path data about the hand of the player or the like is acquired based on the image information from the image sensor ISE. Specifically, the motion of the hand of the player is detected using the color image information and the depth information shown in FIG. 10 to acquire the moving path data.

For example, skeleton information that specifies the motion of the player (operator) viewed from the image sensor ISE is acquired based on the image information from the image sensor ISE. The moving path data about a part (shape input indicator) of the player or a thing (shape input indicator) possessed by the player is acquired based on the acquired skeleton information.

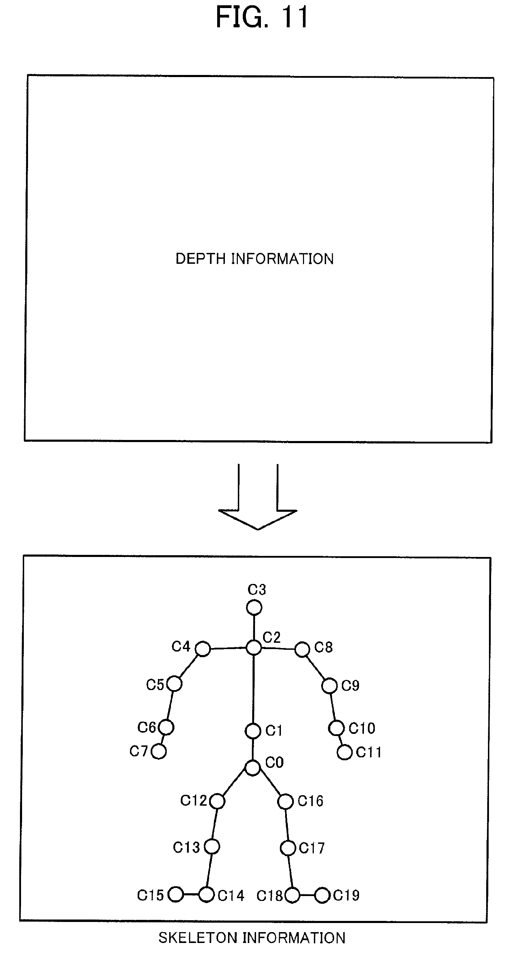

As shown in FIG. 11, the skeleton information used to specify the motion of the player is acquired based on the image information (e.g., depth information shown in FIG. 10). In FIG. 11, position information (three-dimensional coordinates) about joints C0 to C19 of a skeleton has been acquired as the skeleton information. The joints C0 to C10 correspond to the joints of the player captured by the image sensor ISE. When the whole body of the player cannot be captured by the image sensor ISE, the skeleton information that includes the position information about only the joints within the captured area is generated.

For example, the three-dimensional shape of the player or the like viewed from the image sensor ISE can be acquired using the depth information shown in FIG. 10. The area of a part (e.g., face) of the player can be specified by face image recognition or the like when using the color image information in combination with the depth information. Therefore, each part of the player and the joint position of each part are estimated based on the three-dimensional shape information and the like. The three-dimensional coordinate information about the joint position of the skeleton is calculated based on the two-dimensional coordinates of the pixel position of the depth information corresponding to the estimated joint position, and the depth information set to the pixel position to acquire the skeleton information shown in FIG. 11.

The motion of the player can be specified in real time by utilizing the skeleton information, so that a novel operation interface environment can be implemented. Moreover, the skeleton information has high compatibility with the motion data about the character disposed in the object space. Therefore, the character can be caused to make a motion in the object space by utilizing the skeleton information as the motion data, for example.

In one embodiment of the invention, a part (e.g., hand) used as the shape input indicator is specified based on the skeleton information shown in FIG. 11, and the moving path data about the specified part (e.g., hand) is acquired as the moving path data used for the character shape recognition process.

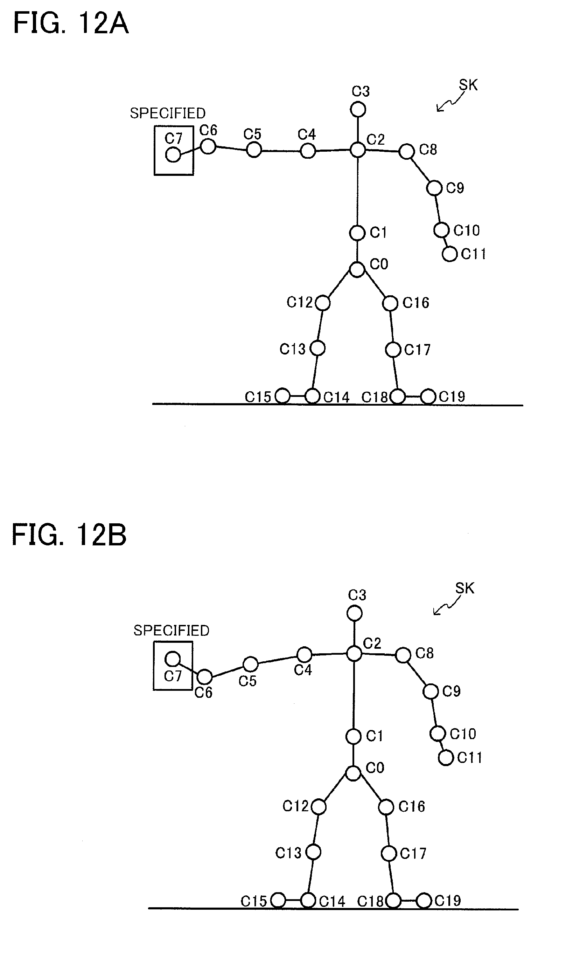

For example, the joint C7 of a skeleton SK shown in FIG. 12A is the joint of the right hand. Therefore, the part of the right hand used as the shape input indicator can be specified by acquiring the information about the skeleton SK. The moving path of the right hand can be specified by acquiring the position information about the joint C7 corresponding to the right hand from the skeleton information, and the moving path data can be acquired. For example, when the position of the joint C7 has moved as shown in FIGS. 12A and 12B, it is considered that the right hand of the player has similarly moved, and the moving path data about the right hand can be acquired from the coordinate position of the joint C7 viewed from the image sensor ISE. The shape recognition process on the shape of a character input by the player with the right hand can be implemented based on the moving path data acquired in each determination period (see FIG. 3, for example).

When the player inputs a character by moving a thing such as a pen or a pointer, the position of the joint C7 shown in FIGS. 12A and 12B is considered to be the position of the thing held by the player with the right hand, and the moving path data about the thing is calculated.

A part used to input a character, a symbol, or the like is not limited to a hand. For example, the moving path data about the hips of the player may be calculated based on the position information about the joint C0 corresponding to the hips shown in FIGS. 12A and 12B, and the shape recognition process may be performed on the shape input by moving the hips. This makes it possible to implement a game that allows the player to input a character, a symbol, or the like by quickly moving the hips, for example.

Whether or not the moving path data is valid data may be determined based on the skeleton information. For example, when it has been detected that the right hand of the player is positioned close to the trunk based on the skeleton information, it may be determined that the moving path data about the right hand is invalid data. Specifically, when the right hand of the player is positioned close to the trunk, the position information about the joint C7 (see FIGS. 12A and 12B) corresponding to the right hand has low reliability. The shape of the character may be erroneously recognized if shape of the character is recognized using the position information about the joint C7 with low reliability. In this case, it is determined that the acquired moving path data is invalid data that cannot be used for the shape recognition process, and the shape recognition process is not performed based on the acquired moving path data.

When it has been determined that the magnitude or the direction of the motion vector that indicates the motion of the hand of the player exceeds the allowable range based on the skeleton information, as described with reference to FIG. 9C, it may determined that the acquired moving path data is invalid data.

The depth information about a part of the player may be acquired based on the image information from the image sensor ISE without acquiring the skeleton information (see FIGS. 12A and 12B), and whether or not the moving path data is valid data may be determined based on the acquired depth information. Specifically, whether or not the moving path data is valid data may be determined using the depth information instead of the skeleton information. For example, when it has been determined that the right hand of the player is positioned close to the trunk based on the depth information, it may be determined that the acquired moving path data is invalid data. Alternatively, whether or not the moving path data is valid data may be determined by determining the depth value included in the depth information within a given period, for example.

### 2.5 Matching process

A specific example of the shape recognition process using the matching process is described below.

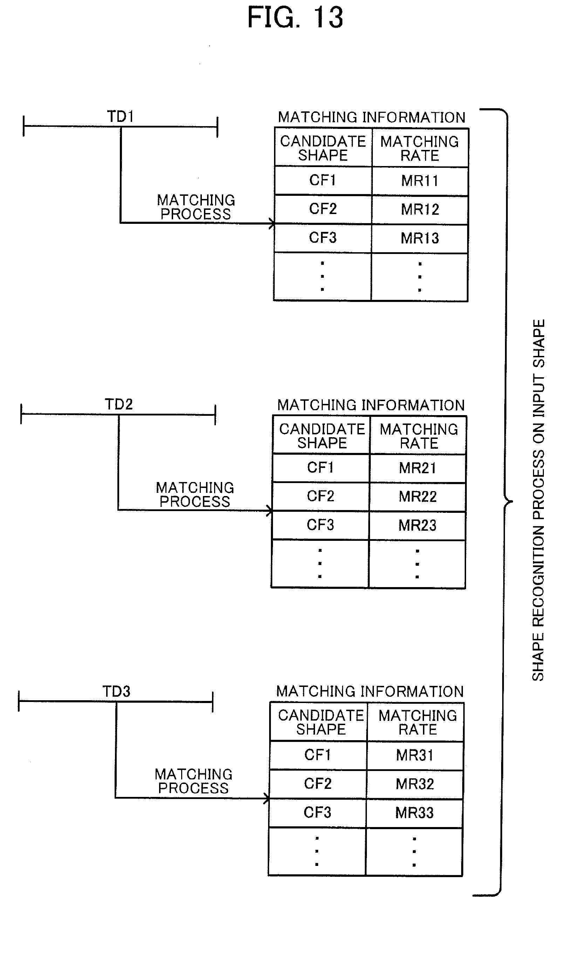

As shown in FIG. 13, the matching process is performed on the input shape input using the hand or the like of the player and a candidate shape in each of the determination periods TD1, TD2, and TD3. Specifically, a plurality of candidate shape patterns are provided in advance, and a known matching process that evaluates the degree of similarity between the input shape and each candidate shape is performed to calculate the matching rate between each candidate shape and the input shape. For example, the matching rate approaches 1.0 (100%) when the input shape and the candidate shape have a high degree of similarity, and approaches 0.0 (0%) when the input shape and the candidate shape have a low degree of similarity.

As shown in FIG. 13, matching information having a data structure in which the matching rate obtained by the matching process in each of the determination periods TD1, TD2, and TD3 is linked to each candidate shape is stored in the matching information storage section 184 shown in FIG. 1, for example. In the matching information corresponding to the determination period TD1, for example, the matching rates MR11, MR12, and MR13 are respectively linked to candidate shapes CF1, CF2, and CF3. In the matching information corresponding to the determination period TD2, the matching rates MR21, MR22, and MR23 are respectively linked to the candidate shapes CF1, CF2, and CF3. The matching information corresponding to the determination period TD3 has a similar data structure.

The shape recognition process is performed on the input shape (e.g., the shape of a character) based on the matching information obtained in the determination periods TD1, TD2, and TD3.

For example, a period from the timing tp1 to the timing tp2 shown in FIG. 4 corresponds to the determination period TD1 shown in FIG. 13, a period from the timing tp2 to the timing tp3 corresponds to the determination period TD2, and a period from the timing tp3 to the timing tp4 corresponds to the determination period TD3. For example, the candidate shape CF1 is the shape of a character "1", the candidate shape CF2 is the shape of a character "2", and the candidate shape CF3 is the shape of a character "3".

In this case, the shape input in a period from the timing tp1 to the timing tp2 shown in FIG. 4 is not similar to each candidate shape ("1 ", "2", and "3"). Therefore, the matching rates MR11, MR12, and MR13 included in the matching information corresponding to the determination period TD1 shown in FIG. 13 have a small value. Likewise, the shape input in a period from the timing tp3 to the timing tp4 shown in FIG. 4 is not similar to each candidate shape ("1", "2", and "3"). Therefore, the matching rates MR31, MR32, and MR33 included in the matching information corresponding to the determination period TD3 shown in FIG. 13 have a small value.

On the other hand, the shape input in a period from the timing tp2 to the timing tp3 shown in FIG. 4 is similar to the candidate shape of the character "2". Therefore, the matching rates MR21 and MR23 included in the matching information corresponding to the determination period TD2 shown in FIG. 13 have a small value, but the matching rate MR22 linked to the candidate shape CF2 ("2") has a large value. Therefore, it can be determined that the input shape input by the player is the shape of a character "2" based on the determination result based on the moving path data in the determination period TD2.

### 2.6 Part recognition process

The recognition process on the shape of a numeral (e.g., "2") has been described above with reference to FIGS. 4, for example. Such a relatively simple character shape can be recognized by performing the matching process on the candidate shape that indicates a character and the input shape.

However, a character having a complex shape (e.g., Chinese character) may not be correctly recognized by performing the matching process on the candidate shape that indicates such a character and the input shape.

In order to deal with such a situation, the candidate shape is formed by a plurality of parts. The shape recognition process is performed on the input shape by performing the matching process on the input shape and each of a plurality of parts of the candidate shape.

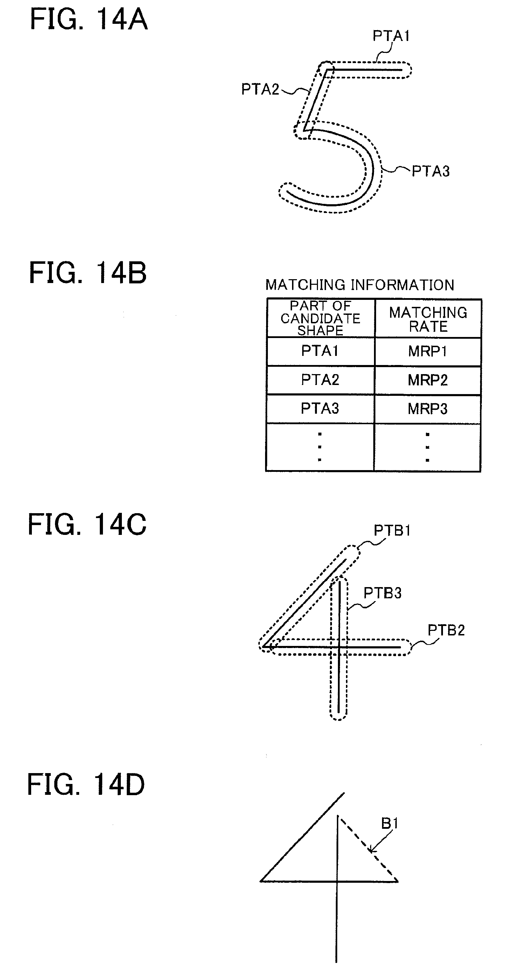

In FIG. 14A, a candidate shape that indicates a character "5" is formed by a plurality of parts PTA1, PTA2, and PTA3. When performing the matching process on the input shape and the candidate shape, the matching process is performed on the input shape and each of the parts PTA1, PTA2, and PTA3. For example, the matching process is performed on the input shape and each of the parts PTA1 (i.e., a horizontal line), PTA2 (i.e., a vertical line that slopes to some extent), and PTA3 (i.e., an arc), and it is determined that the input shape is "5" when the input shape includes a shape that corresponds to each of the parts PTA1, PTA2, and PTA3.

FIG. 14B shows an example of the matching information in this case. In the matching information shown in FIG. 14B, the part PTA1 of the candidate shape is linked to the matching rate MRP1 between the part PTA1 and each part of the input shape, the part PTA2 of the candidate shape is linked to the matching rate MRP2 between the part PTA2 and each part of the input shape, and the part PTA3 of the candidate shape is linked to the matching rate MRP3 between the part PTA3 and each part of the input shape. The matching information is calculated in each of the determination periods TD1, TD2, and TD3 shown in FIG. 13, and the shape recognition process is performed on the input shape based on the matching information in each determination period. For example, it is determined that the input shape is "5" when the matching rate MRP1 of the part PTA1 has a large value in the determination period TD1 shown in FIG. 13, the matching rate MRP2 of the part PTA2 has a large value in the determination period TD2, and the matching rate MRP3 of the part PTA3 has a large value in the determination period TD3. According to this configuration, the shape of a character or the like having a complex shape can be correctly recognized.

FIG. 14C shows an example of parts PTB1, PTB2, and PTB3 of a candidate shape that indicates a character "4". When recognizing the shape of a character "4", a candidate shape formed by a plurality of parts PTB1, PTB2, and PTB3 shown in FIG. 14C is provided, and the shape recognition process is implemented by performing the matching process on the input shape and each of the parts PTB1, PTB2, and PTB3. Alternatively, a traversable candidate shape shown in FIG. 14D may be provided, and the shape recognition process may be implemented by performing the matching process on the input shape and the candidate shape.

In FIG. 14D, a part indicated by B1 does not form a character "4". However, when the player inputs a character with the hand (see FIG. 2A), the moving path of the hand includes a line indicated by B1 in FIG. 14D. Therefore, a more accurate shape recognition process can be implemented by performing the matching process using a traversable candidate shape as shown in FIG. 14D.

The player may draw a character "4" in a stroke order differing from that shown in FIG. 14D. It is possible to deal with such a situation by providing a first traversable candidate shape shown in FIG. 14D and a second candidate shape from which the part indicated by B1 in FIG. 14 is omitted, and performing the shape recognition process on the input shape and each candidate shape.

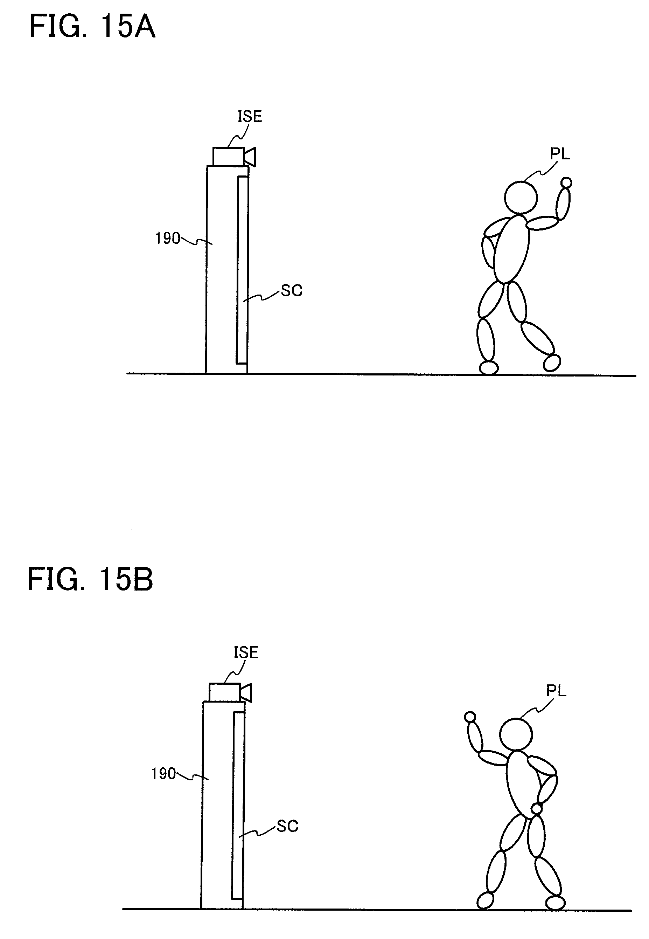

An example in which the player inputs a character or the like with the hand (finger) has been described above. Note that the invention is not limited thereto. In FIGS. 15A and 15B, a player PL makes a hip (waist) shake motion. In this case, the moving path drawn by the hips of the player may be detected, and the shape recognition process may be performed to determine whether or not the moving path coincides with a given shape. This makes it possible to implement a novel game.

### 2.7 Specific processing example

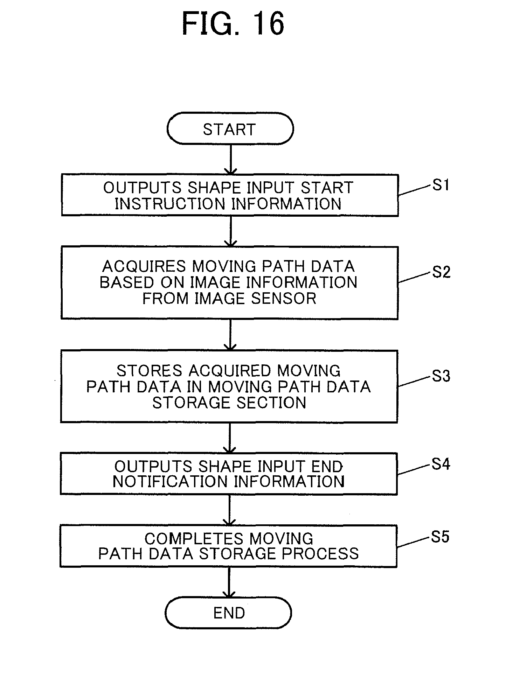

A specific processing example according to one embodiment of the invention is described below with reference to flowcharts shown in FIGS. 16 to 18. FIG. 16 is a flowchart showing the moving path data acquisition process.

As described with reference to FIG. 8A, the shape (e.g., character) input start instruction information (start instruction image) is output (step S1). As described with reference to FIG. 2, the moving path data is acquired based on the image information from the image sensor (step S2). Specifically, the skeleton information is acquired based on the image information, and the moving path data is acquired based on the acquired skeleton information, as described with reference to FIGS. 11 to 12B.

The acquired moving path data is then stored in the moving path data storage section 178 shown in FIG. 1 (step S3). The shape input end notification information is then output, as described with reference to FIG. 8B (step S4). The moving path data storage process is thus completed (step S5).

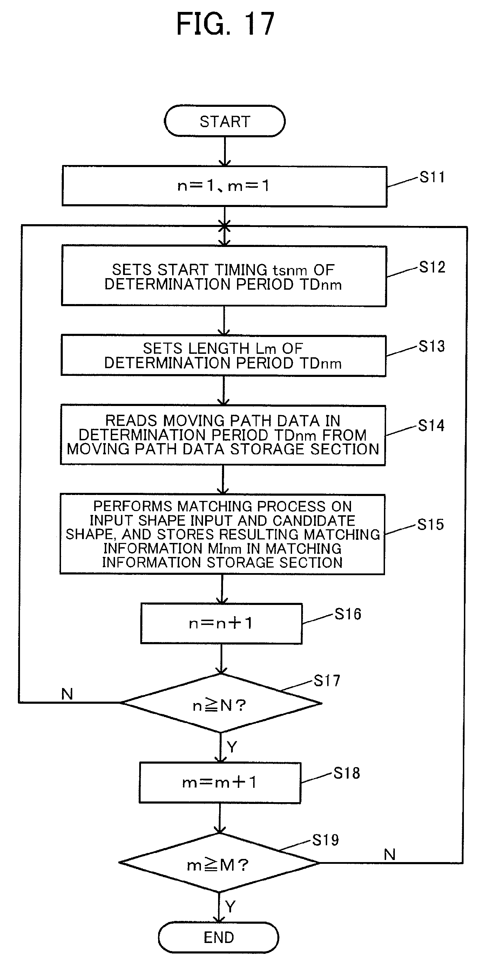

FIG. 17 is a flowchart showing the shape recognition process using the determination period setting method shown in FIGS. 5A to 5C

In a step S11, n and m are set to 1. The start timing tsnm of the determination period TDnm is then set (step S12). For example, when n=1 and m=1, the start timing ts11 of the determination period TD11 shown in FIG. 5A is set to be the start timing tsnm of the determination period TDnm. The length Lm of the determination period TDnm is then set (step S13). For example, when m=1, the length L1 of the determination period TD11 shown in FIG. 5A is set to be the length Lm of the determination period TDnm.

The moving path data in the determination period TDnm is then read from the moving path data storage section 178 (step S14). Specifically, the moving path data corresponding to the determination period TDnm is read from the moving path data that has been stored in the moving path data storage section 178 by the process shown in FIG. 16.

The matching process is then performed on the input shape input and the candidate shape, and the resulting matching information MInm is stored in the matching information storage section 184 (step S15). n is then incremented by one (step S16).

Whether or not n is equal to or larger than N is then determined (step S 17). When n is less than N, the process in the steps S 12 to S15 is repeated. When n is equal to N, m is incremented by one (step S 18). Whether or not m is equal to or larger than M is then determined (step S19). When m is less than M, the step S12 is performed again. When m is equal to M, the process is terminated.

The shape recognition process can thus be performed on the input shape while setting the determination periods as shown in FIGS. 5A to 5C.

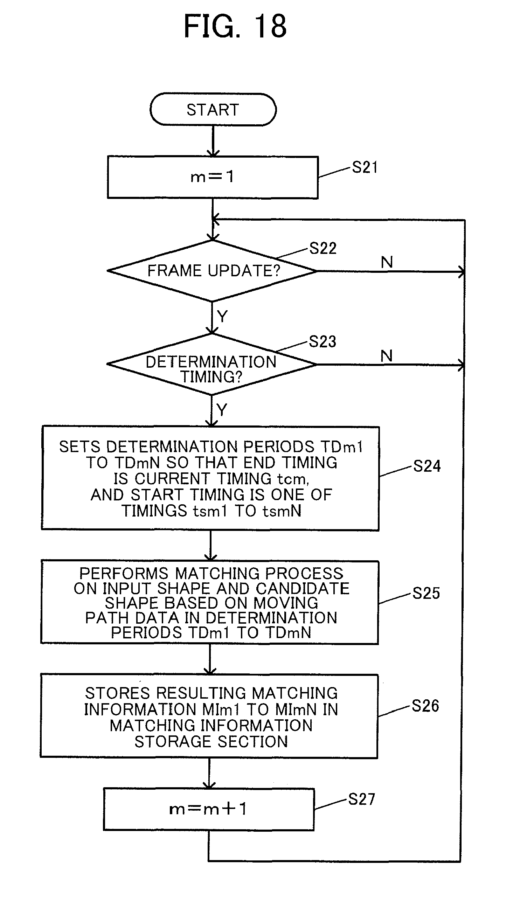

FIG. 18 is a flowchart showing the shape recognition process using the determination period setting method shown in FIGS. 6A to 6D.

In a step S21, m is set to 1. Whether or not the frame update timing has been reached is then determined (step S22). When the frame update timing has been reached, whether or not the current frame is the determination timing using the determination period is determined (step S23). Specifically, whether or not the current timing (frame) is one of the timings tc1, tc2, tc3, and tc4 shown in FIGS. 6A to 6D is determined.

When the current timing is the determination timing, the determination periods TDm1 to TDmN are set so that the end timing is the current timing tcm, and the start timing is one of the timings tsm1 to tsmN (step S24). For example when m=1, the determination periods TD11 to TD15 are set so that the end timing is the current timing tc1, and the start timing is one of the timings ts11 to ts15 (see FIG. 6A).

The matching process is then performed on the input shape and the candidate shape based on the moving path data in the determination periods TDm1 to TDmN (step S25). The resulting matching information MIm1 to MImN is stored in the matching information storage section 184 (step S26). m is then incremented by one (step S27), and the step S22 is performed again.

The shape recognition process can thus be performed on the input shape while setting the determination periods as shown in FIGS. 6A to 6D.

Although some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention. Any term (e.g., player, hand, or character) cited with a different term (e.g., operator, shape input indicator, or input shape) having a broader meaning or the same meaning at least once in the specification and the drawings can be replaced by the different term in any place in the specification and the drawings. The moving path data acquisition method, the shape recognition method based on the moving path data, the determination period setting method, and the like are not limited to those described in connection with the above embodiments. Methods equivalent to the above methods are included within the scope of the invention. The invention may be applied to various games. The invention may be applied to various image generation systems such as an arcade game system, a consumer game system, a large-scale attraction system in which a number of players participate, a simulator, a multimedia terminal, a system board that generates a game image, and a mobile phone.

## Claims

1. An image generation system comprising:
a moving path data acquisition section that acquires moving path data about a shape input indicator;
a moving path data storage section that stores the moving path data acquired by the moving path data acquisition section; and
a shape recognition section that performs a shape recognition process on an input shape that has been input using the shape input indicator based on the moving path data,
the shape recognition section performing the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

2. The image generation system as defined in claim 1,
the shape recognition section performing the shape recognition process on the input shape while variably changing a length of the first to Nth determination periods.

3. The image generation system as defined in claim 1 or 2,
the shape recognition section performing the shape recognition process on the input shape while setting the first to Nth determination periods so that the start timing of the (K+1)th determination period occurs after the start timing of the Kth determination period, and an end timing of each of the first to Nth determination periods is set to a current timing.

4. The image generation system as defined in claim 3,
the moving path data storage section including first to Nth buffers, a Kth buffer among the first to Nth buffers storing the moving path data in the Kth determination period among the first to Nth determination periods; and
the shape recognition section deleting the moving path data of which length corresponding to a period length tc2-tc1 from a head region of the first to Nth buffers when the current timing has changed from a timing tc1 to a timing tc2, and adding the moving path data obtained in a period from the timing tc1 to the timing tc2 to an end region of the first to Nth buffers.

5. The image generation system as defined in any one of claims 1 to 4, further comprising:
an information generation section that generates at least one of start instruction information and end notification information about the shape input using the shape input indicator.

6. The image generation system as defined in claim 5,
the shape recognition section performing the shape recognition process on the input shape while setting the first to Nth determination periods based on an output timing of the start instruction information and an output timing of the end notification information.

7. The image generation system as defined in any one of claims 1 to 6,
the shape recognition section determining whether or not a shape recognition determination period reset condition has been satisfied, and resetting a determination period that has been set before the shape recognition determination period reset condition has been satisfied when the shape recognition determination period reset condition has been satisfied.

8. The image generation system as defined in claim 7,
the shape recognition section determining that the shape recognition determination period reset condition has been satisfied when a reset instruction input shape that instructs resetting a shape recognition determination period has been input using the shape input indicator.

9. The image generation system as defined in claim 7 or 8,
the shape recognition section determining whether or not the shape recognition determination period reset condition has been satisfied based on a motion vector of a moving path of the shape input indicator.

10. The image generation system as defined in any one of claims 1 to 9, further comprising:
an image information acquisition section that acquires image information from an image sensor,
the moving path data acquisition section acquiring the moving path data based on the image information from the image sensor.

11. The image generation system as defined in claim 10,
the moving path data acquisition section acquiring skeleton information based on the image information from the image sensor, the skeleton information specifying a motion of an operator viewed from the image sensor, and acquiring the moving path data about the shape input indicator based on the acquired skeleton information, the shape input indicator being a part of the operator or a thing possessed by the operator.

12. The image generation system as defined in claim 11,
the moving path data acquisition section specifying a part of the operator used as the shape input indicator based on the skeleton information, and acquiring moving path data about the specified part as the moving path data about the shape input indicator.

13. The image generation system as defined in claim 11 or 12,
the moving path data acquisition section determining whether or not the moving path data is valid data based on the skeleton information.

14. The image generation system as defined in any one of claims 1 to 13,
the shape recognition section performing a matching process on the input shape that has been input using the shape input indicator and a candidate shape in each of the first to Nth determination periods, storing matching information in a matching information storage section, the matching information including a matching rate that is obtained by the matching process and linked to each candidate shape, and performing the shape recognition process on the input shape based on the matching information obtained in the first to Nth determination periods.

15. The image generation system as defined in any one of claims 1 to 14,
the shape recognition section performing the shape recognition process on the input shape by performing a matching process on the input shape and each of a plurality of parts of a candidate shape.

16. A shape recognition method that recognizes an input shape that has been input using a shape input indicator, the shape recognition method comprising:
acquiring moving path data about a shape input indicator;
storing the acquired moving path data in a moving path data storage section;
performing a shape recognition process on an input shape that has been input using the shape input indicator based on the moving path data; and
performing the shape recognition process on the input shape that has been input using the shape input indicator based on the moving path data in each of first to Nth (1≤K<N) determination periods, the first to Nth determination periods being set so that a start timing of a (K+1)th determination period occurs after a start timing of a Kth determination period.

17. A computer-readable information storage medium storing a program that causes a computer to execute the shape recognition method as defined in claim 16.
